# EUROPEAN PATENT APPLICATION

(11) **EP 4 847 235 A1**
(43) Date of publication of application: **02.12.2026**
(21) Application number: 26179476.2
(22) Date of filing: 19.05.2026
(51) Int. Cl.: B29C 65/02, B29C 65/82, B29C 65/48, B29C 65/50, B65B 9/20, B65B 51/30, B29C 65/10, B29C 65/14, B29C 65/78

(54) **METHOD FOR MONITORING A HEAT-SEALING STATION, RELATED METHOD OF TRAINING A CLASSIFIER, PACKAGING MACHINE, AND COMPUTER PROGRAM PRODUCT**

(30) Priority: 30.05.2025 IT 202500012763
(71) Applicant: Tetra Laval Holdings & Finance S.A., 1009 Pully (CH)
(72) Inventor: CAVALAGLIO CAMARGO MOLANO, Jacopo, 41123 MODENA (IT); BULGARELLI, Daniele, 41123 MODENA (IT); BARLETTA, Federica, 41123 MODENA (IT)
(74) Representative: Tetra Pak Patent Attorneys

(57) **Abstract**

A computer implemented method for monitoring a heat-sealing station (160; 162, 164) of a packaging machine (10) is disclosed. The heat-sealing station (160; 162, 164) is configured to heat-seal a longitudinal portion (212) of a sealing strip (210) to a longitudinal edge (202) of a web of packaging material (20). The method receives (1002) a thermal image (250) from a thermal camera (402) arranged downstream of the heat-sealing station (160; 162, 164) and configured to monitor an overlapping area (254) where the sealing strip (210) overlaps with the longitudinal edge (202). Next, the method selects (1004) a line (258) of the thermal image (250) in a direction (x) being transversal to an advancement direction of the web of packaging material (20), detects (2004) in the pixel data (p1-pn) of the selected line (258) the overlapping area (254) where the sealing strip (210) overlaps with the longitudinal edge (202), and selects the respective pixel data of the overlapping area (254). Next, the method generates (1006) a predetermined number of pixel data (p1-pk) by scaling the pixel data of the overlapping area (254), and estimates (1006a) a value (Q; P) indicative of the operation of the heat-sealing station (160; 162, 164) as a function of the predetermined number of pixel data (p1-pk).

## Description

### Technical Field

The present invention relates to solutions for monitoring a heat-sealing station configured to apply a sealing-strip to a web of packaging material in a packaging machine configured to produce packages from the web of packaging material.

### Background art

As is known, many pourable food products, such as fruit or vegetable juice, pasteurized or UHT milk, and wine, are sold in packages made of sterilized packaging material. A typical example of this type of package is the parallelepiped-shaped package for pourable food products known as Tetra Brik Aseptic^{®}, which is made by folding and sealing laminated strip packaging material. Packages of this sort are normally produced on fully automatic packaging machines, also known as filling machines.

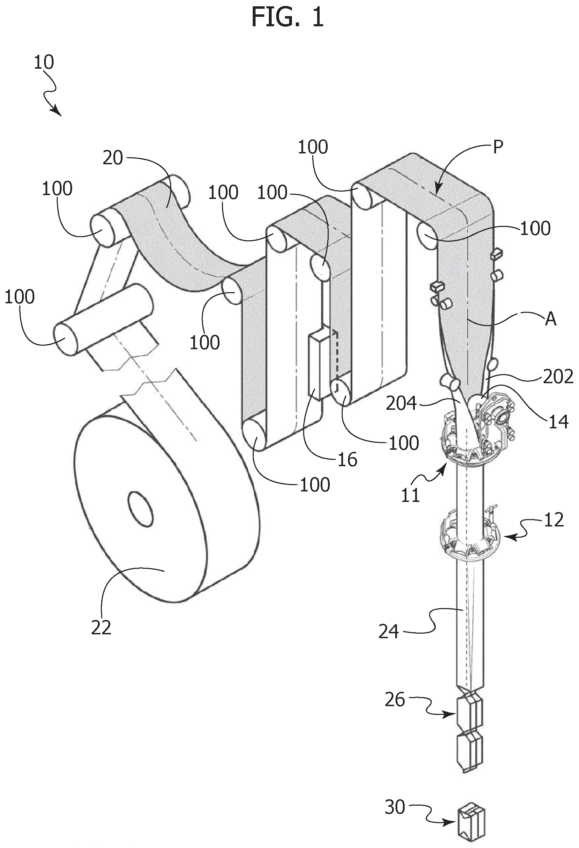

Figure 1 shows an example of a packaging machine 10 for continuously producing sealed packages 30 of a food product from a web of packaging material 20. In the example considered, the packaging machine 10 is configured to unwind the packaging material 20 from a reel 22 and feed the web of packaging material 20 along a forming path P, e.g., by means of guide members 100, such as rollers. The packaging material 20 has usually a multilayer sheet structure comprising one or more stiffening and strengthening base layers, typically made of a fibrous material such as paper or cardboard, or mineral-filled polypropylene material, covered on both sides with one or more heat-sealable material layers, such as polyethylene film. In the case of aseptic packages for long-storage products, such as UHT milk, the packaging material 20 usually also comprises a gas- and/or light-barrier material layer, such as aluminum foil or ethyl vinyl alcohol (EVOH) film, which is superimposed on a heat-sealable material layer, and is in turn covered with another heat-sealable material layer forming the inner face of the package 30 that eventually contacts the food product.

In the example considered, the packaging machine 10 is configured to form a continuous vertical tube 24 from the web of packaging material 20. For example, in Figure 1, the web 20 is fed to a forming apparatus 11 configured to form the tube 24 of packaging material by folding the web 20 around an axis A into a tube, so as to superimpose a first longitudinal edge 204 of the web 20 over a second longitudinal edge 202 of the web 20. Next, a sealing apparatus 12 is configured to seal the longitudinal edges 202 and 204 to form, along the tube 24, a longitudinal seal parallel to, and spaced from, axis A. For example, the longitudinal sealing may involve a heat sealing.

In the example considered, the sealed vertical tube 24 is filled with a pourable food product by means of a filling apparatus 14 extending inside the sealed vertical tube 24. In this respect, it is sufficient that the pourable food product is also only pourable when producing the packages 30, and sets after the packages 30 are sealed. One example of such a food product is a portion of cheese, that is melted when producing packages 30, and sets after packages 30 are produced.

The filling apparatus 14 receives a sterilized or sterile-processed pourable food product. In this case, the packaging machine 10 is configured to sterilize the web of packaging material 20, e.g., by applying a chemical sterilizing agent, such as a hydrogen peroxide solution, or by physical sterilization, such as by means of an electron beam. Once sterilization is completed, any residue left by the chemical sterilizing agent is removed, for example by heating. The sterilized packaging material 20 is maintained in a closed, sterile environment, typically within an isolation chamber, and is then folded and sealed longitudinally to form the vertical tube 24.

In the example considered, the vertical tube 24 is advanced along a vertical advancing direction to a forming station (not shown in Figure 1). Typically, the forming station is configured to form a continuous sequence of pillow packs 26 connected to one another by a transverse sealing operation of the vertical tube 24. For example, for this purpose, the forming station may be configured to grip the vertical tube 24 along equally spaced transversal sections by a jaw system including two or more pairs of jaws acting cyclically and successively on the vertical tube 24 to form the sequence of pillow packs 26. The transversal sealing operation is often an inductive or ultrasound sealing operation. Moreover, the forming station is configured to separate the pillow packs by cutting the sequence of pillow packs 26. Often the transversal sealing operation and the cutting operation are also combined.

In the example considered, the single packs are then conveyed to a folding station (not shown in Figure 1) configured to mechanically fold the single packs into finished, substantially parallelepiped-shaped packages 30.

To prevent the longitudinal edges 202 and 204 of the web 20, in particular the fibrous material in the multilayer sheet structure of the web of packaging material 20, from coming into contact with and absorbing the pourable food product, the longitudinal edges 202 and 204 of the web 30 are often fluidly isolated by sealing a web-fed sealing strip to at least one of the longitudinal edges 202 and 204 of the web of packaging material 20 at a sealing station 16. Typically, the sealing strip is a heat-sealing strip, e.g., of plastic material, wherein the sealing station 16 and the sealing apparatus 12 use a heat-sealing operation.

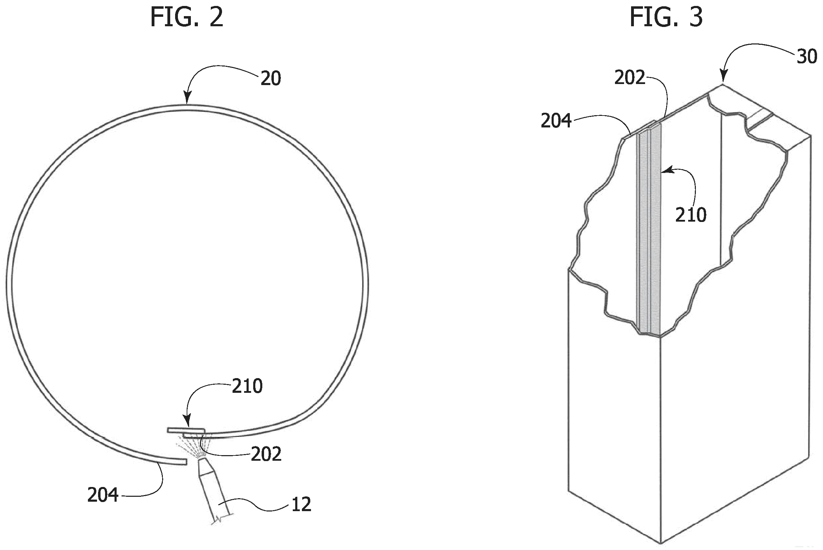

For example, Figure 2 shows the scenario, wherein the sealing station 16 has applied, e.g., via a heat-sealing operation, a sealing strip 210 to the longitudinal edge 202. Specifically, the sealing strip 210 is a flat strip, which projects in part from the longitudinal edge 202, i.e., a first longitudinal portion of the sealing strip 210 is fixed to the longitudinal edge 202 of the web 20, while a second (loose) longitudinal portion of the sealing strip 210 projects from the longitudinal edge 202. Specifically, the sealing station 16 is configured to apply the sealing strip 210 to the side of the web 20 which corresponds to the inner side of the tube 24 (once formed) . Accordingly, when folding the web 20, the inner side of the longitudinal edge 204 is brought into contact with the outer side of the longitudinal edge 202, and the sealing apparatus 12 seals the longitudinal edge 204 to the longitudinal edge 202. However, the sealing apparatus 12 also seals the second (loose) longitudinal portion of the sealing strip 210 that projects from the longitudinal edge 202 to the inner side of the longitudinal edge 204 of the web 20. Figure 3 shows an example of a package 30 obtained via the sealing operation described with respect to Figure 2.

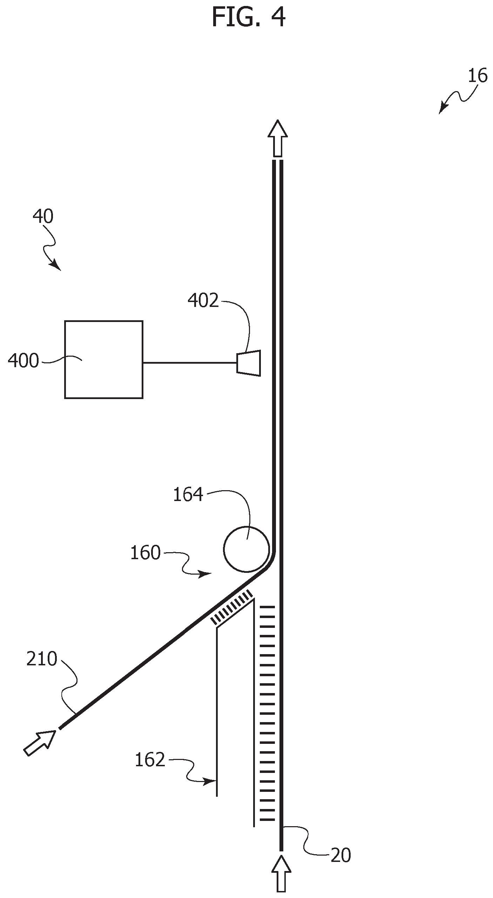

Figure 4 schematically shows a possible implementation of the sealing station 16. In the example considered, the web 20 and the sealing strip 210 are first web-fed to a heat-sealing station 160. In the example considered, the heat-sealing station 160 comprises one or more heating units 162 configured to heat the web 20 and the sealing strip 210, and a pressure roller 164 configured to pressure-seal a first longitudinal side portion of the sealing strip 210 to the longitudinal side portion 202 of the web of packaging material 20, leaving the second (loose) longitudinal portion of the sealing strip 210 projecting from the longitudinal edge 202 of the web of packaging material 20.

Specifically, in the arrangement of Figure 2, the sealing strip 210 is applied to the side of the web corresponding to the inner face of the tube 24.

Various solutions have been proposed for an online monitor of the sealing operation of the sealing strip 210. For example, as shown in Figure 4, for this purpose, the packaging machine 10 may comprise a monitoring system 40. For example, in the example considered, the monitoring system 40 comprises a visual and/or infrared camera 402 configured to acquire images of the strip 210, once the strip 210 has been applied to the web 20 via the sealing station 160. Accordingly, the images acquired by the camera 402 may be elaborated by a processing system 400 in order to classify the quality of the sealing strip 210. For example, such solutions are disclosed in documents EP 2 186 624 B1, EP 3 967 476 B1, EP 4 306 302 A1, EP 4 306 303 A1, EP 4 306 305 A1, which are incorporated herein by reference for this purpose.

### Summary of the invention

Considering the foregoing, various embodiments of the present disclosure provided improved solutions for monitoring the operation of a heat-sealing station configured to apply a sealing-strip to a web of packaging material.

According to one or more embodiments, one or more of the above objects are achieved by a method having the distinctive elements set forth specifically in the ensuing claims. Embodiments moreover concern a related method of training a classifier, packaging machine, and a corresponding computer program product that can be loaded into the memory of at least one computer and comprises portions of software code for implementing the steps of the method when the product is run on a computer. As used herein, reference to such a computer program product is intended as being equivalent to reference to a computer-readable means containing instructions for controlling a processing system in order to co-ordinate execution of the process. Reference to "at least one computer" is clearly intended to highlight the possibility of the present disclosure being implemented in a distributed/modular way.

The scope of protection is defined in the appended claims, which form an integral part of the technical teaching of the description provided herein.

As mentioned before, various embodiments relate to solutions for monitoring operation of a heat-sealing station of a packaging machine. For example, the respective method may be implemented with a processing system comprising one or more computers. For example, the method may be implemented via a suitable computer program product which, when the program is run on a computer, cause the computer to implement the method.

Specifically, in various embodiments, the heat-sealing station is configured to heat-seal a longitudinal portion of a sealing strip to a longitudinal edge of a web of packaging material. In various embodiments, the heat-sealing station is configured to heat-seal a longitudinal portion of a sealing strip to a first longitudinal edge of a web of packaging material, and the packaging machine further comprises a tube forming and sealing device configured to form a tube from the web of packaging material by overlapping a second longitudinal edge of the web of packaging material over the first longitudinal edge of the web of packaging material and longitudinally heat-sealing the overlapping longitudinal edges. In various embodiments, the packaging machine also comprises a filling device configured to fill the tube with a pourable product.

In various embodiments, the method receives a thermal image from a thermal camera, wherein the thermal camera is arranged downstream of the heat-sealing station and configured to monitor an overlapping area where the sealing strip overlaps with the longitudinal edge. Next, the method selects a line of the thermal image in a direction being transversal to an advancement direction of the web of packaging material and detects in the pixel data of the selected line the overlapping area where the sealing strip overlaps with the longitudinal edge, e.g., via an edge detection operation, and selects the respective pixel data of the overlapping area.

In various embodiments, the method generates then a predetermined number of pixel data by scaling, e.g., via an up-sampling or down-sampling, the pixel data of the overlapping area.

In various embodiments, the method estimates then a value indicative of the operation of the heat-sealing station as a function of the predetermined number of pixel data. For example, the method may use for this purpose a classifier, such as a machine learning model, configured to receive at input the predetermined number of pixel data and providing at output the value indicative of the operation of the heat-sealing station.

### Brief description of the drawings

Embodiments of the present invention will be described by way of example with reference to the accompanying drawings, in which:
- Figure 1 shows a perspective view, with parts removed for clarity, of a packaging machine configured to produce sealed packages from a web of packaging material;
- Figures 2 and 3 schematically show the heat-sealing of a sealing strip to the web of packaging material of Figure 1 and the resulting sealed package, respectively;
- Figure 4 schematically shows a heat-sealing station of the packaging machine of Figure 1, where a sealing strip is heat-sealed to a web of packaging material and the operation of the heat-sealing station is automatically verified via a monitoring system;
- Figures 5A and 5B show an embodiment of a heat-sealing operation of a sealing strip to a web of packaging material;
- Figure 6A shows an example of a thermal image acquired by monitoring the heat-sealing operation of a sealing strip to a web of packaging material;
- Figure 6B shows exemplary temperature profiles of the thermal image of Figure 6A;
- Figure 7 shows an embodiment of a method of monitoring the correct application of a sealing strip to a web of packaging material;
- Figure 8 shows an embodiment of a classifier used in the method of Figure 7;
- Figures 9A and 9B show further exemplary temperature profiles obtained by monitoring a heat-sealing operation of a sealing strip to a web of packaging material;
- Figure 10 shows an embodiment of a method for normalizing a temperature profile, e.g., as shown in Figures 9A and 9B;
- Figure 11 shows examples of normalized temperature profiles;
- Figure 12 shows a further embodiment of a method of monitoring the correct application of a sealing strip to a web of packaging material;
- Figure 13 shows an embodiment of a classifier used in the method of Figure 12;
- Figures 14 shows an embodiment of a method of training the classifier of Figure 13;
- Figure 15 shows an embodiment of a dataset comprising a plurality of thermal images and respective quality data;
- Figure 16 shows an embodiment of a training dataset obtained by processing the dataset of Figure 15;
- Figure 17 shows an embodiment for training the classifier of Figure 13 based on the training dataset of Figure 16;
- Figure 18 shows further exemplary temperature profiles obtained by monitoring a heat-sealing operation of a sealing strip to a web of packaging material;
- Figure 19 shows a further embodiment of a training dataset; and
- Figure 20 shows an embodiment for training a classifier adapted to estimate a position of a heating unit of the heat-sealing operation of the sealing strip based on the training dataset of Figure 19.

### Detailed description

In the ensuing description numerous specific details are provided in order to enable an in-depth understanding of the embodiments. The embodiments may be implemented without one or various specific details, or with other methods, components, materials, etc. In other cases, well-known operations, materials, or structures are not represented or described in detail so that the aspects of the embodiments will not be obscured.

Reference throughout the ensuing description to "an embodiment" or "one embodiment" means that a particular characteristic, distinctive element, or structure described with reference to the embodiment is comprised in at least one embodiment. Thus, use of phrases such as "in an embodiment" or "in one embodiment" in various points of this description do not necessarily refer to one and the same embodiment. Moreover, the details, characteristics, distinctive elements, or structures may be combined in any way in one or more embodiments.

The references used herein are provided merely for convenience and do not define the scope or meaning of the embodiments. For example, the block diagrams included in the accompanying figures and described below are not to be understood as a representation of the structural features, or constructive limitations, but must be interpreted as a representation of functional characteristics, properties that is, intrinsic properties of the devices and defined by the effects obtained or functional limitations that can be implemented in different ways, therefore in order to protect the functionalities thereof (possibility of functioning) .

Where not otherwise defined, all the technical and scientific terms used herein have the same meaning commonly used by persons of ordinary skill in the field pertaining to the present invention. In the event of a conflict, this description, including the definitions provided, shall be binding.

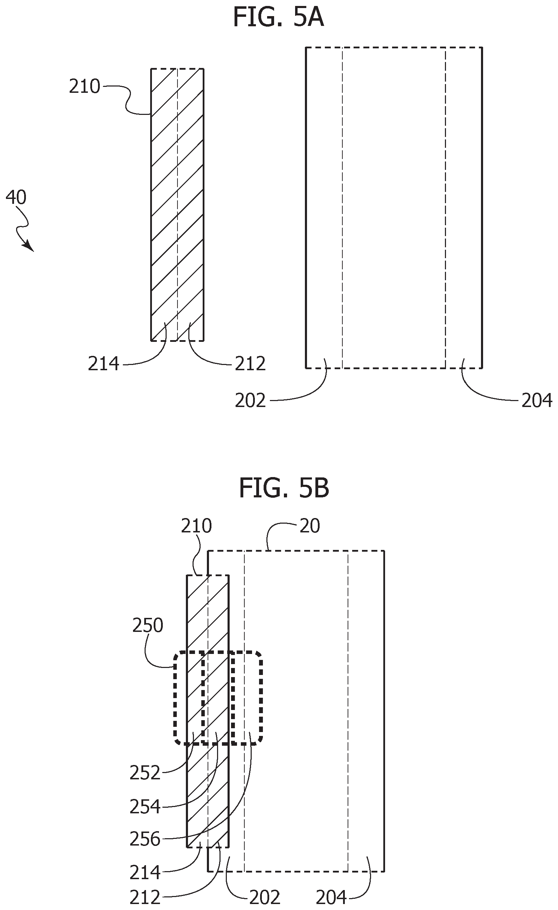

In Figures 5 to 20 described below, parts, elements or components that have already been described with reference to Figures 1 to 4 are designated by the same references used previously in these figures. The description of these elements has already been made and will not be repeated in what follows in order not to burden the present detailed description.

Specifically, as described in the foregoing, various embodiments of the present disclosure relate to a packaging machine 10 for producing sealed packages 30 of a pourable product, in particular a pourable food product, such as milk, milk drinks, yoghurt, yoghurt drinks, fruit juice, wine, tomato sauce, emulsions, beverages containing pulp, salt, sugar, etc. The sealed packages 30 are produced from a multilayer packaging material 20, for non-limiting example from a web of multilayer packaging material fed along a conveying path P.

In various embodiments, the multilayer packaging material 20 has heat-seal properties (i.e. portions of the multilayer packaging material can be sealed to one another). The multilayer packaging material may comprise at least one electrically conductive layer. In further detail, the multilayer packaging material 20 may comprise at least one layer of fibrous material, such as e.g. paper or cardboard, and at least two layers of heat-weldable or heat-sealable material, e.g. polyethylene, interposing the layer of fibrous material in between one another. The heat-weldable or heat-sealable material has thermoplastic properties. Preferentially, one of these two layers of heat-sealable or heat-weldable material may define the inner face of packages 30 contacting the pourable product. Moreover, the multilayer packaging material may also comprise a layer of gas- and light-barrier material, e.g. aluminium foil or ethylene vinyl alcohol (EVOH) film, preferentially being arranged between one of the layers of the heat-sealable material and the layer of fibrous material.

In various embodiments, the packaging machine 10 is configured to produce the packages 30 by forming a tube 24 from the web 30, longitudinally sealing the tube 24, filling the tube 24 with the pourable product and to transversally seal, and preferentially transversally cut the tube 24. For this purpose, as described in the foregoing, the packaging machine 10 may comprises one or more of:
- one or more conveying devices 100 configured to advance the web 20 along the conveying path P,
- a tube forming and sealing device 11 and 12 configured to progressively form the tube 24 from the advancing web 20 and to longitudinally seal the tube 24,
- a filling device 14 for filling the tube 24 with the pourable product, and
- a transversal sealing device (not visible in the figures) configured to transversally seal the tube 24 for obtaining a respective transversal seal portion, e.g., by locally compressing the tube 24 and heating the respective portions of the layers of heat-sealable or heat-weldable material. The heating may occur by generating ultrasonic vibrations or by induction heating.

In various embodiments, the packaging machine 10 comprises also a sterilization device (not visible in the figures) configured to sterilize the advancing web 20, e.g. by electron beam sterilization or chemical sterilization, and an isolation chamber delimiting an inner environment from an outer environment. In various embodiments, the inner environment is a sterile (aseptic) environment. In this case, the tube forming and sealing device 11 and 12 is at least partially arranged within the isolation chamber, in particular within the inner environment, and is configured to fold and longitudinally seal the tube 24 within the isolation chamber, in particular within the inner environment.

As described with respect to Figures 2 and 3, in such packaging machines 10, a strip applicator station 16, in particular a heat-sealing station, may be configured to apply a sealing strip 210 to the web of packaging material 20.

In this respect, Figure 5A illustrates, in front view, a section of the sealing strip 210 and the web of packaging material 20. For reference purpose, the sealing strip 210 may be divided into a first 212 and second 214 longitudinal side section. For reference purpose, the web of packaging material 20 may have a first 202 and a second 204 side section or edge.

Figure 5B illustrates how the sealing strip 210 is applied to the web of packaging material 20 by the sealing station 16. Specifically, in the embodiment considered, the sealing station 16, e.g. the heat-sealing station 160, is configured to apply the first side section 212 of the sealing strip 210 to the first side section 202 of the web of packaging material, whereby the second side section 214 of the sealing strip 210 extends outside of the web of packaging material 20.

In the solution described with respect to Figures 2 and 3, the second side section 204 of the web of packaging material 20 may then be applied to the first side section 202 of the web of packaging material 20 in order to form the tube 24 in the forming device 11, and the second side section 204 of the web of packaging material 20 is sealed to the first side section 202 of the web of packaging material 20 and the second side section 214 of the sealing strip 210 via the longitudinal sealing device 12.

Specifically, when observing a given strip-application area 250 with a thermal imaging camera (also known as thermographic, thermal-imaging or IR camera or imager), e.g., the camera 402 of Figure 4, it may be observed that the strip-application area 250 comprises:
- an overlapping area 254, essentially corresponding to the area of the first side section 212 of the sealing strip 210 fixed to the web of packaging material 20;
- a heat affected strip area 252, essentially corresponding to the area of the second side section 214 of the sealing strip 210 protruding from the web of packaging material 20; and
- a heat affected web area 256.

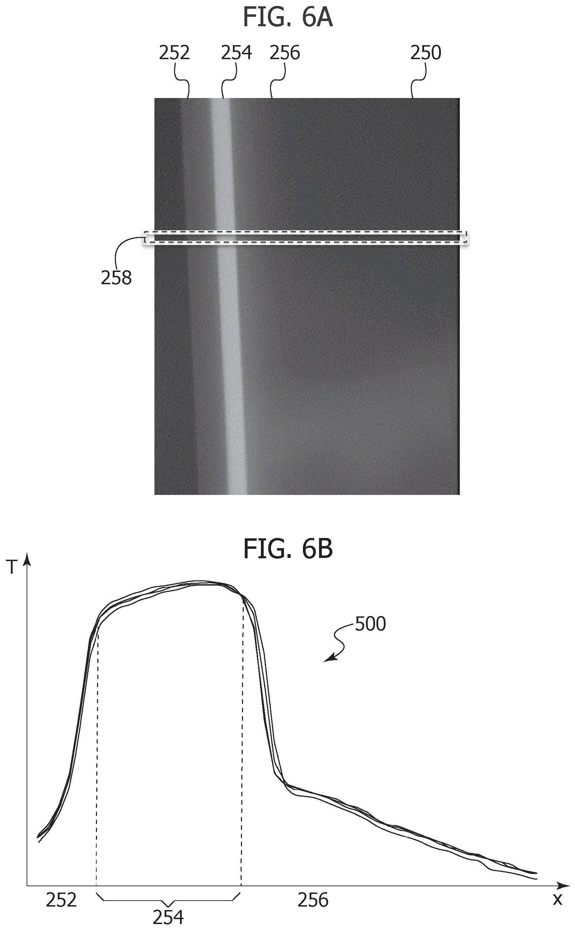

For example, Figure 6A shows an example of an image 250 obtained with the thermal camera 402 configured to monitor the web of packing material 20 downstream the heat-sealing unit 160. Specifically, the thermal image 250 is represented as a grayscale image, wherein higher temperatures are brighter, i.e., have a higher value for the respective pixel. For example, in this image, it may be observed that a given area corresponding to the overlapping area 254 has a higher temperature than the second side section 214 of the sealing strip 210 protruding from the web of packaging material 20. However, also the remaining web area 256 has a lower temperature than the overlapping area 254.

This is also shown in greater detail in Figure 6B, which shows the temperature evolutions 500 of various lines 258 of the thermal image 250.

For example, in various embodiments, by analysing the temperature of the strip-application area 250, in particular the overlapping area 254, the processing system 400 may detect underheating (cold seal) or overheating areas originated during the heat-sealing operation of the first side section 212 of the sealing strip 210.

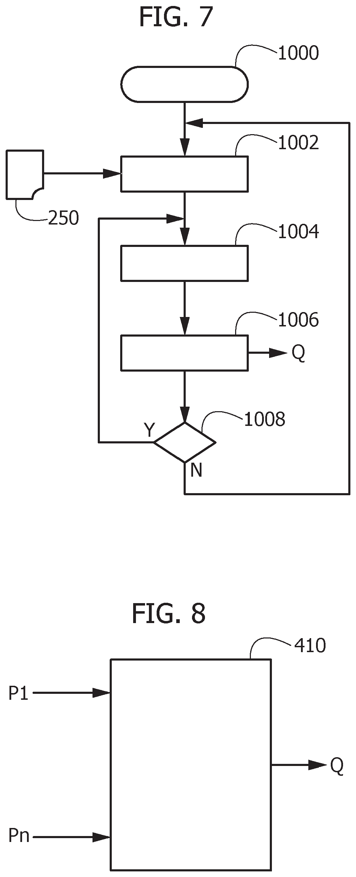

For example, Figure 7 shows an embodiment of a method of estimating the quality of the application of the sealing strip 210 to the web of packing material 20. For example, this method may be implemented in the processing system 400 of the monitoring system 40 shown in Figure 4. For example, in various embodiments, the processing system 400 may comprise one or more microprocessors configured to execute software instructions. Accordingly, in various embodiments, the processing system 410 may execute software instructions which cause the one or more microprocessors to implement the method. However, the processing system 410 may also comprise one or more dedicated hardware circuits implementing one or more operations of the method directly in hardware, e.g., via an Application Specific Integrated Circuit (ASIC), or a suitable programming of a Digitial Signal Processor (DSP), a Field Programmable Gate Array (FPGA), and/or a Neural Processing Unit (NPU), or a combination thereof.

Specifically, after a start step 1000, the method receives in a step 1002 a thermal image 250 from the thermal camera 402. Next, the method selects in a step 1004 one or more lines 258 of the thermal image 250 in a direction x being transversal, e.g., perpendicular, to the advancement direction of the sealing strip 210 and the web of packaging material 20. In general, it is not required that the line 258 is indeed perpendicular to the advancement direction of the web of packaging material 20. For example, in various embodiments, each line 258 corresponds to a row of the thermal image 250. However, when using a different arrangement of the thermal camera 402 with respect to the web of packaging material 20, each line 258 may correspond to a column of the thermal image 250. In a step 1006, the (pixel) data of the selected one or more lines 258 are processed by a classifier 410.

Accordingly, as shown in Figure 8, the classifier 410 receives for each selected line 258 the respective values of a given number n of pixels, e.g., values p1 to pn, and estimates a quality class Q for the values p1 to pn of the selected one or more lines 256. For example, in various embodiments, the classifier 410 receives the values p1 to pn of a single line 258 of the thermal image 250 and estimates for the line 258 a respective quality class Q. For example, the quality class Q may indicate a correct/normal sealing operation or an anomalous sealing operation. In various embodiments, an anomalous sealing operation may be further classified as a cold-sealing operation or a hot-sealing operation. In general, the values p1 to pn may also correspond just to a selected subset of the pixels of a line 256, i.e., the number n may be smaller than the number of pixels of the thermal image 250 in the direction x. However, the number n should be selected to comprise at least the overlapping area 254.

For example, in various embodiments, in order to estimate the quality class Q, the classifier 410 is configured to compare the values p1 to pn with respective reference values, e.g., indicative of the temperature evolution of a correctly applied sealing strip 210. For example, in various embodiments, the classifier 410 is configured to calculate a value indicative of the difference or distance between the values p1 to pn and the respective reference values, e.g., via a sum of absolute difference or a Euclidean distance between the values p1 to pn with respective reference values. Next, in response to determining that the difference is smaller than a threshold, the classifier 410 may set the value Q to a first value indicative of a normal sealing operation, e.g., associated with a good quality. Conversely, in response to determining that the difference is greater than the threshold, the classifier 410 may set the value Q to a second value indicative of an anomalous sealing operation, e.g., associated with an insufficient quality.

Alternatively, the classifier 410 may use a machine learning model. For example, the machine-learning model may comprise a parameterized mathematical function, such as an artificial neural network, configured to estimate the quality Q as a function of the values p1 to pn. In particular, by acquiring a training dataset that comprises the values p1 to pn of a plurality of tests, and the respective quality class Q, a training algorithm may modify, e.g. through an iterative method, the parameters of the mathematical function, in such a way as to reduce the difference, i.e., the error, between the estimated quality class Q and the respective quality values Q of the training dataset. For example, the quality Q of the training dataset may be obtained via tests, such as destructive tests, which determine whether the sealing strip 210 remains attached to the web of packaging material 20 when a given force is applied. For example, such tests may be executed with the web of packaging material 20 (once the sealing strip 210 has been fixed to the web of packaging material 20), or with the final package 30. Additionally or alternatively, an operator may analyze the temperature profile and classify the temperature evolution as a correct temperature evolution, a cold-sealing operation or a hot-sealing operation. Consequently, once the machine-learning model has been trained, the mathematical function can provide an estimate of the quality class Q as a function of the respective values p1 to pn of one or more lines 258.

As schematically shown in Figure 7 via a step 1008, the steps 1004 and 1006 may be repeated for a plurality of positions of the thermal image 250. For example, in response to determining that the quality class Q of a different position of the thermal image 250 has to be evaluated (output "Y" of the verification step 1008), the method returns to the step 1004 for selecting further one or more lines 258 of the thermal image 250. Conversely, in response to determining that all requested positions of the thermal image 250 have been evaluated (output "N" of the verification step 1008), the method returns to the step 1002 for obtaining a new thermal image 250.

For example, in this way, the step 1004 may select a given single line 258 of the thermal image 250 and the classifier 410 may estimate a respective quality Q. Next, by repeating the steps 1004 and 1006 for different lines 258, the method may determine a plurality of qualities Q for a given thermal image 250. However, the method may also estimate just a single quality Q for a given thermal image 250, i.e., the method may directly proceed from the step 1006 to the step 1002. For example, in various embodiments, the classifier always receives the values p1 to pn of a predetermined row of the thermal image 250. The predetermined row may be fixed or programmable.

The inventors have observed that the width of the first side section 212 of the sealing strip 210 (and thus the dimension of the overlapping area 254) may vary. For example, this may derive from a different setting of the packaging machine 10, wherein the position of the sealing strip 210 and/or the position of the web of packing material 20 varies. For example, this implies that the width of the first side section 212 of the sealing strip 210 may vary, e.g. between 3 and 5 mm, with a nominal value of 4 mm. However, also the sealing strip 210 itself may have a different width, e.g., in case the sealing strip 210 is generated via a splicing device of the packing machine 10.

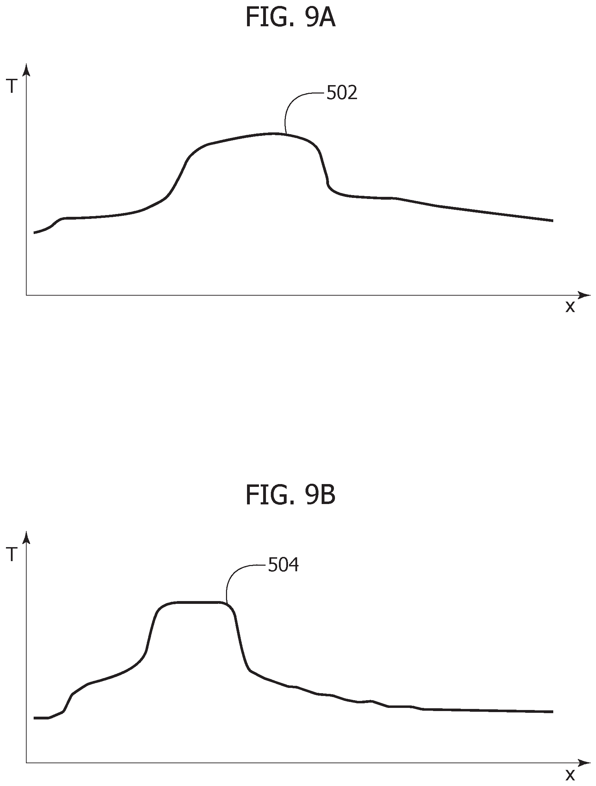

For example, this is also shown in Figures 9A and 9B, which show the temperature evolution 502 of a line 258 of the thermal image 250 acquired in a first condition where the width of the first side section 212 is greater than a nominal value and the temperature evolution 504 of a line 258 of the thermal image 250 acquired in a second condition where the width of the first side section 212 is smaller than a nominal value, respectively.

The inventors have observed that the classifier 410 has to consider this variation of the width of the overlapping area 254. For example, when comparing the values p1 to pn with a reference curve, the classifier 410 has to store a reference curve for each possible width. Conversely, when using a machine learning method, the training dataset has to comprise representative data for various widths.

However, the inventors have also observed that the quality of the sealing strip is same when the temperature values of the pixels of the overlapping area 254 have given values, irrespective of the width of the overlapping area 254.

Accordingly, in various embodiments, the processing system 400 is configured to normalize the width of the overlapping area 254.

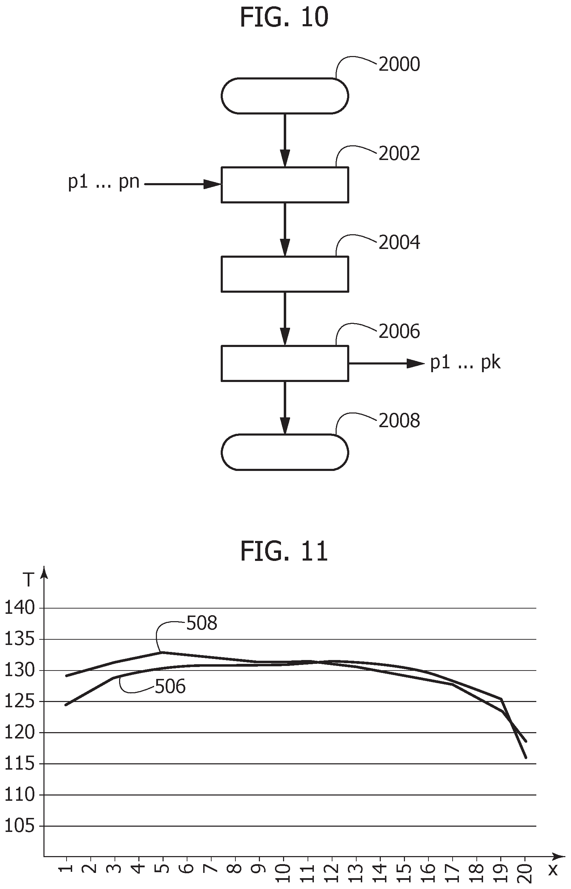

Figure 10 shows in this respect, a method for normalizing the width of the overlapping area 254 of a given line 258. In various embodiments, this method is implemented in the processing system 400.

Specifically, after a start step 2000, the method receives in a step 2002 the data p1 to pn of a given line 258. Next the method selects in a step 2004 the values of the data p1 to pn which correspond to the overlapping area 254.

For example, in various embodiments, the method detects the overlapping area 254 by detecting edges in the temperature evolution of the data p1 to pn. In fact, as shown in Figures 6B, 9A or 9B, the overlapping area 254 has a significantly higher temperature. For example, the edge detection method may calculate the derivative of the temperature evolution of the data p1 to pn, e.g., by calculating the difference between respective two consecutive values. Next, the method identifies the edges, i.e., the pixels where the temperature variation is greater than a given threshold value, and selects the values between these edges, thereby selecting values p1 to pm corresponding to a subset of the values p1 to pn.

Instead of using an edge detection, the method may detect the overlapping area 254 by determining the portion of the values p1 to pn, where the values are p1 to pn are greater than a threshold value. In general, the threshold value may be fixed, programmable or determined as a function of the values p1 to pn. For example, the method may determine the maximum value of the values p1 to pn and set the threshold to a given percentage of the maximum value. Alternatively, the method may also calculate the average value of the values p1 to pn and set the threshold to a value selected between the average value and the maximum value. Accordingly, in this case, the method identifies the range where the values p1 to pn are greater than the threshold and selects the values in this range, thereby selecting values p1 to pm corresponding to a subset of the values p1 to pn.

Those of skill in the art will appreciate that the number m of selected values p1 to pm may thus be variable based on the width of the area 254.

In various embodiments, the method determines then in a step 2006 a number k of values p1 to pk as a function of the values p1 to pm, and the method ends in a stop step 2008. For example, in various embodiments, the number k is fixed and selected in a range between 10 and 50, e.g., between 10 and 30, e.g., k = 20. Preferably, the number k is smaller than the number n of values p1 to pn.

Accordingly, the scaling may be implemented with an up-sampling or down-sampling operation, based on whether the number k is greater than the number m or smaller than the number m, respectively. For example, in various embodiments, the method may determine the number m of selected values p1 to pm and:
- in response to determining that the number m is smaller than the requested number k, the method may use an up-sampling operation, e.g., via interpolation, in order to generate the values p1 to pk as a function of the values p1 to pm; and
- in response to determining that the number m is greater than the requested number k, the method may use a down-sampling operation, e.g., via interpolation, in order to generate the values p1 to pk as a function of the values p1 to pm.

For example, Figure 11 shows two temperature evolutions 506 and 508 for the values p1 to pk determined for the temperature evolutions 502 and 504 shown in Figures 9A and 9B.

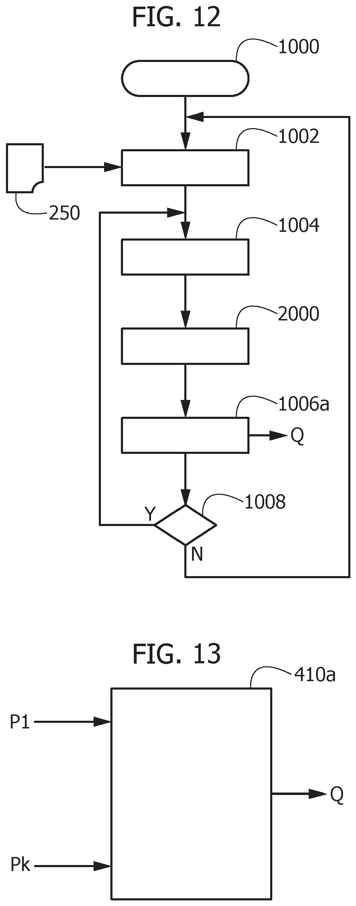

Figure 12 shows an embodiment of a modified method of estimating the quality of the sealing operation of the sealing strip 210 to the web of packing material 20. For example, this method may be implemented in the processing system 400 of the monitoring system 40 shown in Figure 4.

Specifically, after the start step 1000, the method receives in the step 1002 again a thermal image 250 from the thermal camera 402. Next, the method selects in a step 1004 one or more lines 258 of the thermal image 250 in a direction x being transversal to the advancement/longitudinal direction of the sealing strip 210 and the advancement path P of the web of packaging material 20, thereby selecting values p1 to pn for each selected line.

In the embodiment considered, the method normalizes then in a step 2000 the values p1 to pn of each selected line 258, in order to determine respective values p1 to pk for each selected line 258. Reference is made to the description of Figure 10 for embodiments of the step 2000. Accordingly, in the embodiment considered, the method processes in a step 1006a the data p1 to pk of the selected one or more lines 258 via a classifier 410a.

Accordingly, as shown in Figure 13, the classifier 410a receives for each selected line 258 the respective values of a given number k of pixels, i.e., values p1 to pk, and estimates a quality class Q for the values p1 to pk of the selected one or more lines 256. For example, in various embodiments, the classifier 410 receives the values p1 to pk of a single line 258 of the thermal image 250 and estimates for the line 258 a respective quality Q.

Thus, in the embodiments considered, the classifier 410a receives a number k of value p1 to pk, which corresponds to the (scaled/normalized) temperature data of the overlapping area 254. Thus, the classifier 410a does not need to consider the width of the overlapping area 254. For example, this simplifies the classifier 410a when the data p1 to pk are compared to k reference values indicative of a good quality Q.

However, the solution is also advantageously when using a machine learning method. In fact, in this case, the training dataset does not have to comprise training data for a significant number of different widths.

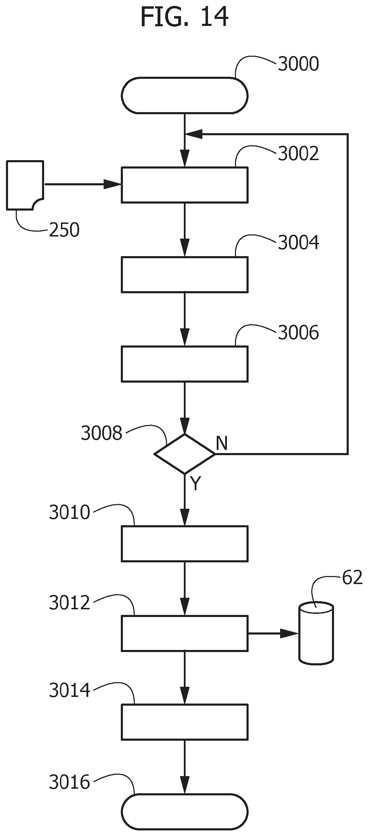

For example, Figure 14 shows an embodiment of a method for training the classifier 410a. In general, the method for training of the classifier 410a may be implemented within the processing system 400, which permits to retrain the classifier 410a when new data are available, or within a different processing system. For example, in the latter case, the processing system 400 may just store the already trained classifier 410a.

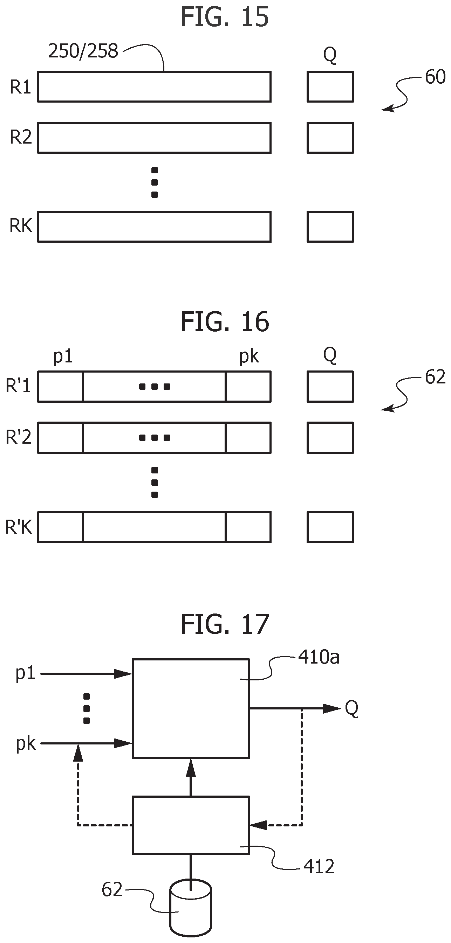

Specifically, after a start step 3000, the method receives in a step 3002 a thermal image 250. Moreover, in a step 3004, the quality Q of the sealing operation of the sealing strip is determined, e.g., via destructive test and/or via classification of an operator. In a step 3006, the data of the thermal image 250 and the respective quality Q are stored. For example, Figure 15 shows an example, wherein the thermal image 250 and the respective quality Q are stored in the form of a data structure 60, such as a table or array, wherein each data record comprises a respective thermal image 250 and a respective quality Q.

As schematically shown via a verification step 3008 these operations are repeated for a plurality of images 250, thereby generating data records R1 to RK. For example, in case insufficient images have been obtained (output "N" of the verification step 3008) the method returns to the step 3002. Conversely, in case sufficient images have been obtained (output "Y" of the verification step 3008) the method proceeds to a step 3010. In various embodiments, the thermal images 250 and the respective quality Q may also be determined in a different order, e.g., by first acquiring the thermal images 250 and then determining the quality class Q for the respective products.

Specifically, in various embodiments, the images 250 are acquired for different operating conditions of the packaging machine 10, e.g., with respect to the temperature of the heating station, e.g., the heating station 160 for the thermal image 250, the relative position of the sealing strip 210 with respect to the web of packaging material 20, and/or the width of the sealing strip 210. In this way, the dataset 60 comprises representative data for various operating conditions of the packaging machine 10. Thus, the steps 3002, 3004 and 3006 may be repeated to acquire one or more data records for each selected operating condition of the packaging machine 10.

In various embodiments, the method selects in the step 3010 one or more lines 258 of the thermal image 250 and the respective data p1 to pn. Thus, instead of storing the complete thermal image 250, the method may also store just the data p1 to pn of the one or more selected lines 258 to a respective data record of the data structure 60.

In various embodiments, the method normalizes then in a step 3012 the data p1 to pn in order to generate respective data p1 to pk. Thus, the step 3012 essentially implements for each data record R1 to RK the operations described with respect to the step/phase 2000. Accordingly, in the embodiment considered and as also shown in Figure 16, the method obtains a data structure 62 comprising a plurality of data records R'1 to R'K, wherein each data record comprises the data p1 to pk for one or more lines 258 of the thermal image 250 and a respective (measured) quality Q. Accordingly, in the embodiment considered, the data p1 to pk correspond to the input features of the classifier 410a.

Finally, in the embodiment considered, the method uses in a step 3014 the data stored to the data structure 62, which represent the training dataset, in order to train the classifier 410a, and the method ends at a stop step 3016.

Specifically, as shown in Figure 17, the method may use the training data 62 to train a machine learning algorithm, such as an artificial neural network (ANN) or a support vector machine (SVM). Specifically, for this purpose, the method may use a parameterized mathematical function 410a configured to provide an estimate of the quality class Q as a function of the values of features p1 to pk. In this case, the method executes a training method 412 that iteratively adjusts the parameters of the function 410a based on the training dataset 62. Specifically, for this purpose, the training method 412 applies the feature values p1 to pk of the various datasets R'1-R'K to the input of the classified 410a and monitors each estimated result Q. Furthermore, the training method 412 iteratively adjusts the values of the parameters of the function 410a to minimize the error between the estimated quality values Q provided by the mathematical function 410a and the quality values Q stored in the training dataset 62.

In this respect, when the classifier is used several times to classify the quality of different positions of the thermal image 250, i.e., different one or more lines, as described with respect to the step 1008, the classifier may be configured to provide the estimate of the quality class Q also as a function of position data, such as a line number, indicating the position of the selected one or more lines.

Various mathematical functions, such as neural networks, and their training are per se well known to the person skilled in the art. For example, in various embodiments, the classifier 410a is based on the Gradient Boosting method. One of the main advantages of Gradient Boosting lies in its ability to minimize prediction errors by focusing on the most difficult cases to predict. Substantially, this ML method operates through an iterative process in which new models - often decision trees - are progressively added, each focusing on the residual errors left by the previous models. In this way, the model continuously improves its performance over time. Essentially, whereas a neural network is a single parameterized mathematical function, Gradient Boosting relies on a combination of multiple functions. In essence, Gradient Boosting belongs to the category of ensemble learning. For example, in various embodiments, the classifier 410a is implemented with XGBoost (eXtreme Gradient Boosting), which is an open-source software library.

The inventors have observed that the solution described in the foregoing permits to detect also an anomalous positioning of the heating station, e.g., the heating station 160 for the thermal image 250. Usually, the anomalous position of the heating station, e.g., comprising a plurality of nozzles emitting hot air, relates mainly to an anomalous position of the heating station with respect to the web of packaging material 20, e.g., due to an anomalous position of the heating station or a lateral/transversal movement of the web of packaging material 20.

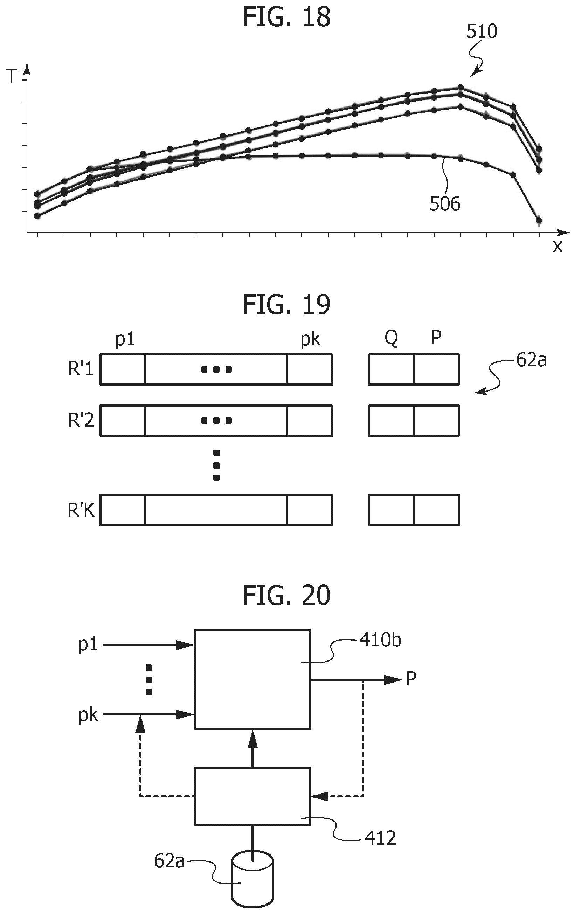

For example, Figure 18 shows the exemplary temperature profile 506 of the data p1 to pk for a correct/normal position of the heating unit, e.g., the heating unit 160 for the thermal image 250, with respect to the web of packaging material 20. Conversely, the thermal profiles 510 relate to an anomalous position and/or a variation in temperature of the heating unit with respect to the web of packaging material 20. For example, the temperature profile 506 has a substantially flat profile, while the temperature profiles 510 increase gradually, which may imply that the heating unit is displaced and/or emits a different temperature with respect to the web of packing material 20.

Accordingly, in various embodiments, at the step 3006 of Figure 14, an operator or directly the processing system 400 may also monitor the position P of the nozzle of the respective heating unit with respect to the web of packing material 20. For example, the position P may be set to a first value for a correct/normal position, and a second value for an anomalous position. Further values may be used, e.g., in order to indicate a lateral displacement (to the right or left, respectively), i.e. a displacement in a direction transversal, e.g., perpendicular, to the advancement path P of the web of packaging material 20.

Accordingly, in this case, the training dataset obtained at the step 3012 may comprise (in addition or as alternative to the quality value Q) a value P indicative of the position of the heating unit with respect to the web of packing material 20. For example, Figure 19 shows a training dataset 62a comprising both the value Q and the value P.

Accordingly, as shown in Figure 20, the step 3014, e.g., the training method 412, may be used to train a classifier 410b configured to classify the position P of the heating unit as a function of the data p1 to pk. In general, this classifier 410b may be implemented together with the classifier 410a, or a separate classifier 410b may be trained.

While Figures 17 and 20 show that the classifiers 410a and 410b provide directly a value Q or P, indeed the classifiers 410a and 410b may provide for each possible value of the quality Q or position P a respective probability, e.g., a probability that the sealing operation was correct, e.g.:
- in case of the quality Q, a probability for a cold-sealing operation and/or a probability of a hot-sealing operation, and/or
- in case of the position P, a probability that the heating unit is in the correct position and/or a probability that the heating unit is laterally displaced (to the left or to the right).

In this case, a post-processing module of the classifier 410a or 410b may provide the value for the quality class Q or position P having the highest probability, thereby implementing a hard-decision.

Accordingly, the present disclosure provides a significant improvement in the monitoring of the correct application of sealing strips in packaging machines by addressing the drawbacks associated with the analysis of thermal image data. In conventional approaches, the number of pixel values associated with the overlapping area between the sealing strip 210 and the web of packaging material 20 varies depending on the actual width of the bonded region. This variability may be due to changes in the relative positioning of the web 20 and the sealing strip 210, or variations of strip width. As a consequence, classifiers or evaluation algorithms must either manage a high degree of variability or store a multitude of reference profiles to accommodate the range of possible widths, which leads to increased complexity and reduced robustness.

The solutions of the present disclosure overcome these disadvantages by introducing a normalization process that detects the overlapping area within the thermal image and rescales the corresponding data to a predetermined number of pixel values p1 to pk. By standardizing the number of values to be considered, a consistent and reliable assessment of the heat-sealing quality is possible. This normalization allows for more efficient training and operation of classifiers, particularly those based on machine learning techniques, as it reduces the dimensional variability and focuses the analysis on the actual thermal characteristics of the bonded region. The result is an enhanced capacity to detect both underheating and overheating conditions, as well as deviations in the positioning of the sealing elements, thereby contributing to improved reliability and product integrity in highspeed packaging processes.

Of course, without prejudice to the principles underlying the invention, the details of implementation and the embodiments may vary widely with respect to what has been described and illustrated herein purely to way of example, without thereby departing from the scope of the present invention, as defined by the annexed claims.

## Claims

1. A computer implemented method for monitoring a heat-sealing station (160; 162, 164) of a packaging machine (10), wherein the heat-sealing station (160; 162, 164) is configured to heat-seal a longitudinal portion (212) of a sealing strip (210) to a longitudinal edge (202) of a web of packaging material (20), wherein the method comprises the step of:
- receiving (1002) a thermal image (250) from a thermal camera (402), wherein the thermal camera (402) is arranged downstream of the heat-sealing station (160; 162, 164) and configured to monitor an overlapping area (254) where the sealing strip (210) overlaps with the longitudinal edge (202);
- selecting (1004) a line (258) of the thermal image (250) in a direction (x) being transversal to an advancement direction of the web of packaging material (20);
- detecting (2004) in the pixel data (p1-pn) of the selected line (258) the overlapping area (254) where the sealing strip (210) overlaps with the longitudinal edge (202), and selecting the respective pixel data of the overlapping area (254);
- generating (1006) a predetermined number of pixel data (p1-pk) by scaling the pixel data of the overlapping area (254); and
- estimating (1006a) a value (Q; P) indicative of the operation of the heat-sealing station (160; 162, 164) as a function of the predetermined number of pixel data (p1-pk) .

2. The method according to Claim 1, wherein detecting in the pixel data (p1-pn) of the selected line (258) an overlapping area (254) comprises processing the pixel data (p1-pn) of the selected line (258) via an edge detection algorithm, wherein a first edge indicates a pixel where the overlapping area (254) starts and a second edge indicates a pixel where the overlapping area (254) ends, and wherein selecting the respective pixel data of the overlapping area (254) comprises selecting the pixel data between the first edge and the second edge.

3. The method according to any of the preceding claims, wherein detecting in the pixel data (p1-pn) of the selected line (258) an overlapping area (254) comprises determining a range of the pixel data (p1-pn) of the selected line (258) where the pixel data reach a threshold value, and wherein selecting the respective pixel data of the overlapping area (254) comprises selecting the pixel data in the range where the pixel data reach the threshold value.

4. The method according to the preceding claims, comprising determining the threshold value as a function of the pixel data (p1-pn) of the selected line (258).

5. The method according to any of the preceding claims, comprising:
- selecting (1004) at least one further line (258) of the thermal image (250) in the direction (x) being transversal to an advancement direction of the web of packaging material (20); and
- repeating the following steps for each further selected line:
- detecting (2004) in the pixel data (p1-pn) of the respective further line (258) a further overlapping area (254) where the sealing strip (210) overlaps with the longitudinal edge (202), and selecting the respective pixel data of the further overlapping area (254);
- generating (1006) a predetermined number of further pixel data (p1-pk) by scaling the pixel data of the further overlapping area (254);
- estimating (1006a) the value (Q; P) indicative of the operation of the heat-sealing station (160; 162, 164) also as a function of the predetermined number of further pixel data (p1-pk) of each further selected line (258).

6. The method according to any of the preceding claims, wherein the value (Q; P) indicative of the operation of the heat-sealing station (160; 162, 164) indicates quality data (Q) for the heat-sealing operation, where a respective first value indicates a requested heat-sealing condition, and/or one or more respective second values indicate an underheating condition and/or overheating condition.

7. The method according to any of the preceding claims, wherein the value (Q; P) indicative of the operation of the heat-sealing station (160; 162, 164) indicates position data (P) for a heating unit (160) of the heat-sealing station (160; 162, 164), where a respective first value indicates a requested position of the heating unit (160) and/or one or more respective second values indicate a displacement of the heating unit (160), preferably in the direction (x) being transversal to the advancement direction of the web of packing material (20).

8. The method according to any of the preceding claims, wherein the heat-sealing station (160; 162, 164) is configured to heat-seal (160; 162, 164) a first longitudinal portion (212) of the sealing strip (210) to a first longitudinal edge (202) of the web of packaging material (20), whereby a second longitudinal portion (214) of the sealing strip (210) protrudes from the first longitudinal edge (202) of the web of packaging material (20) and the overlapping area (254) corresponds to the area where the first longitudinal portion (212) of the sealing strip (210) overlaps with the first longitudinal edge (202) of the web of packaging material (20), and wherein the packaging machine (10) further comprises a tube forming and sealing device (11, 12) configured to form a tube (24) from the web of packaging material (20) by overlapping a second longitudinal edge (204) of the web of packaging material (20) over the first longitudinal edge (202) of the web of packaging material (20) and longitudinally heat-sealing the overlapping longitudinal edges (202, 204).

9. The method according to any of the preceding claims, wherein generating (1006) a predetermined number of pixel data (p1-pk) by scaling the pixel data of the overlapping area (254) comprises:
- when the number of the pixel data of the overlapping area (254) is smaller than the predetermined number of pixel data (p1-pk), generating the predetermined number of pixel data (p1-pk) via an up-sampling of the pixel data of the overlapping area (254); and
- when the number of the pixel data of the overlapping area (254) is greater than the predetermined number of pixel data (p1-pk), generating the predetermined number of pixel data (p1-pk) via a down-sampling of the pixel data of the overlapping area (254).

10. The method according to any of the preceding claims, comprising estimating (1006a) the value (Q; P) indicative of the operation of the heat-sealing station (160; 162, 164) via a classifier (410a; 410b) configured to receive at input the predetermined number of pixel data (p1-pk) and providing at output the value (Q; P) indicative of the operation of the heat-sealing station (160; 162, 164).

11. The method according to the preceding claim, wherein the classifier (410a; 410b) is implemented with a machine learning model trained with a training dataset (62; 62a) acquired for different operating conditions of said packaging machine (10).

12. A method of training a classifier (410a, 410b), comprising the steps of:
- receiving a plurality of thermal images (250) and for each thermal image (250) a respective value (Q; P) indicative of the operation of a heat-sealing station (160; 162, 164), wherein each thermal image (250) comprises thermal data of an overlapping area (254) where a sealing strip (210) overlaps with a longitudinal edge (202) of a web of packaging material (20) after a heat-sealing operation executed by the heat-sealing station (160; 162, 164);
- generating a training dataset (62; 62a) by repeating the following steps for each of the plurality of thermal images (250):
- selecting (1004) a line (258) of the thermal image (250) in a direction (x) being transversal to an advancement direction of the web of packing material (20),
- detecting (2004) in the pixel data (p1-pn) of the selected line (258) the overlapping area (254) where the sealing strip (210) overlaps with the longitudinal edge (202), and selecting the respective pixel data of the overlapping area (254),
- generating (1006) a predetermined number of pixel data (p1-pk) by scaling the pixel data of the overlapping area (254),
- storing the predetermined number of pixel data (p1-pk) and the respective value (Q; P) indicative of the operation of the heat-sealing station (160; 162, 164) to the training dataset (62; 62a); and
- training (3014; 412) a classifier (410a) via the training dataset (62; 62a), whereby the classifier (410a; 410b) is configured to receive at input the predetermined number of pixel data (p1-pk) and providing at output the value (Q; P) indicative of the operation of the heat-sealing station (160; 162, 164).

13. The method according to Claim 11 or the previous Claim, wherein the classifier uses Gradient Boosting, such as eXtreme Gradient Boosting.

14. A packaging machine (10) comprising:
- a heat-sealing station (160; 162, 164) configured to heat-seal a longitudinal portion (212) of a sealing strip (210) to a longitudinal edge (202) of a web of packaging material (20) ;
- a thermal camera (402) arranged downstream of the heat-sealing station (160; 162, 164) and configured to monitor an overlapping area (254) where the sealing strip (210) overlaps with the longitudinal edge (202); and
- a processing system (400) connected to the thermal camera (402) and configured to implement the method according to any of the preceding claims.

15. A computer-program product comprising instructions which, when the program is run on a computer, cause the computer to implement the steps of the method according to any of Claims 1 to 13.
